# EUROPEAN PATENT SPECIFICATION

(11) **EP 1 406 011 B1**
(45) Date of publication and mention of the grant of the patent: **26.10.2005**
(21) Application number: 02722896.4
(22) Date of filing: 30.04.2002
(51) Int. Cl.: F03D 9/02, F03D 3/04, F03D 9/00

(54) **WIND PUMPING POWER GENERATION DEVICE**
WINDPUMPENENERGIEERZEUGUNGSVORRICHTUNG
DISPOSITIF DE GENERATION D'ELECTRICITE PAR POMPAGE D'AIR

(30) Priority: 07.06.2001 JP 2001171893
(43) Date of publication of application: 07.04.2004
(73) Proprietor: Murai, Wasaburo, Osaka-shi, Osaka 558-0055 (JP)
(72) Inventor: Murai, Wasaburo, Osaka-shi, Osaka 558-0055 (JP)
(74) Representative: Hofer, Dorothea
(86) International application number: PCT/JP2002/004315
(87) International publication number: WO 2002/101233

(56) References cited:
- WO-A1-82/03662
- JP-A- 58 015 767
- JP-A- 58 126 476
- JP-U- 60 143 173
- US-A- 1 586 914

## Description

### Technical Field

The present invention relates to a wind power pumped hydropower generating apparatus pumping up water utilizing wind power and converting potential energy of the pumped-up water to electrical power.

### Background Art

A conventional wind turbine generator generates power by directly rotating a generator with a wind turbine. The wind turbine generator includes a horizontal axis type and a vertical axis type. Examples of the horizontal axis type are propeller type, multi-bladed type and the like, while examples of the vertical axis type are Darrieus type, Savonius type and the like. In general, the propeller type is widely used.

The propeller type wind turbine generator is of what is called a "lift-type" and excellent in that it allows for high-speed rotation. On the other hand, it does not show sufficient capability in capturing wind energy, and in some cases, it includes long and large blades depending on its capacity, for which a larger installation area is required.

The document WO 82/03662 relates to a plant for utilization of wind and waves. In this apparatus, a large number of wind turbines 7 and floats 15 drive a pump 10, so as to pump water to a pressure vessel 11 which is provided in a lower portion of the apparatus (main body 1). The water is guided to a turbogenerator 12 through a pressure pipe 13 under pressure, and electric power is generated. In addition, a wind turbine is implemented by vertical tubular shaft 7a, connection sleeve 8b and socket 8c. Wind turbine and a wind turbine plate 7 are connected in a fixed manner to each other during operation. Further, a plurality of coaxial wind turbines are integrally connected.

### Disclosure of the Invention

An object of the present invention is to provide economic means for generating electric power by wind power, which performs high wind energy capturing effect and suitable energy storage capability, allowing for easy control of rotating speed of a generator and obtaining a stable output frequency. Another object of the present invention is to utilize a generator performing a rotation speed faster than that directly powered by wind and to enlarge generator capacity by integrating individual small generators.

A wind power pumped hydropower generating apparatus according to the present invention performing the above-described objects is constituted as follows. A wind power pumped hydropower generating apparatus includes a wind turbine constituted as an assembly of a plurality of wind turbine units, each having a vertical central axis. In the wind turbine unit, a rotor shaft is coaxially and rotatably supported on a frame formed by a pair of upper and lower frame decks coaxially held with a space therebetween, so as to allow rotation on the central axis. A rotor is coaxially and rotatably supported on the rotor shaft between the pair of flame decks. The rotor is constituted of a pair of rotor disk plates held with a space therebetween and a plurality of buckets, each curved in a convex or an arc shape and provided between the rotor disk plates in a distributed manner in the same curve orientation and in equal angular intervals with respect to the central axis. A directional rotational motion transmitting mechanism is attached to connect the rotor to the rotor shaft, and it transmits a rotation of the rotor in a definite direction to the rotor shaft, but does not transmit a rotation of the rotor shaft in the same direction to the rotor. A plurality of guide vanes constituted of plates curved like an arc are provided, and pivotably supported by a guide vane shaft, attached on one end of the guide vane, in equal angular intervals at positions closest to an outer end of the rotor on the frame decks. A guide vane operating mechanism is provided, and it operates the guide vanes so that the guide vanes pivot and form a shield on an outer circumference of the rotor when the apparatus is in a closed state while each of the guide vanes pivots by a definite angle from the closed state so as to open an airflow window of the rotor when the apparatus enters into an open state. A plurality of plate-like auxiliary guide vanes are attached to the frame decks, one end of which is located close to an outer end of the guide vane in the open state and extends to the same direction as the guide vanes in the open state extends. A wind turbine tandem is constituted by coaxially stacking a plurality of the wind turbine units and connecting the rotor shafts of the wind turbine units adjacent to each other. The wind turbine tandem is fixed above water by a supporting member. The wind power pumped hydropower generating apparatus includes the prescribed wind turbine tandem, a pump located in the water and driven by an extension shaft coaxially attached to a lower end of the connected rotor shaft, a tank provided on the top of the wind turbine tandem, a water turbine provided in relatively lower portion of the wind turbine tandem, a main generator driven by the water turbine, a pump-up tube connecting the pump to the tank, a discharge tube connecting the tank to the water turbine and a drain tube extending from the water turbine to an open water area.

With such a structure, according to the present invention, instead of directly generating power with the wind energy, water is pumped up to the tank provided on the top of the frame with the pump driven by the wind turbines for conversion of wind energy to potential energy. After the water is temporarily stored, the water is allowed to fall in order to convert the potential energy to electric power as hydroelectric power generated by the main generator. Electrical output power and frequency are controlled by a valve provided in the discharge tube. The total amount of potential energy of the water stored in the tank is determined by a height and a volume of the tank, and it is easy in terms of design to increase the size of the tank. In this method, since the wind turbine drives not the generator directly but the pump, sophisticated control is not required except for generating a necessary torque by further reducing the rotation speed of the rotor when the wind is weak and except for preventing over-speed of the pump or the rotor of the wind turbine when the wind is strong. In addition, wind input to the apparatus which tends to considerably fluctuate can be leveled. Moreover, when electric power is directly generated by a wind turbine generator, the rotation speed is as low as several tens of revolutions per minute and a generator should be a multi-polar generator having approximately 100 poles, resulting in a disadvantageously large outer dimension of the generator. However, when electric power is generated by a water turbine generator, the rotation speed can be made as high as several hundreds of revolutions per minute and the generator can be made smaller. Further, the wind turbine tandem according to the present invention is such a high-rise structure that the structure presents a condition suitable for mounting the tank on the top, and allowing for affording sufficient potential energy to the pumped-up water.

In the wind power pumped hydropower generating apparatus according to the present invention, more preferably, a plurality of assemblies of the wind turbine tandem and the extension shaft as well as the pump and the pump-up tube are arranged in one row with some space apart from each other, and an inter-unit guide vane is provided between the two adjacent wind turbine tandems respectively. The tank and the main generator as well as the discharge tube and the drain tube are provided in common for the plurality of assemblies described above.

With such a structure, even an air current passing between the wind turbine tandems is commutated by the inter-unit guide vane to pass through the wind turbine, which is effective in generating further larger torque. In addition, this structure achieves an economic effect that the tank and the generator having a combined capacity can be installed in common for the assembled wind turbine tandem as described above, instead of the tank and the generator installed in a distributed manner for each wind turbine tandem.

### Brief Description of the Drawings

Fig. 1 is a side view of a wind power pumped hydropower generating apparatus in an embodiment of the present invention.
Fig. 2 is a side view of a wind turbine unit in Fig. 1.
Fig. 3 is a horizontal cross-sectional view of the wind turbine unit in Fig. 1, with a guide vane in an open state.
Fig. 4 is a horizontal cross-sectional view of the wind turbine unit in Fig. 1, with the guide vane in a closed state.
Fig. 5 is a plan view of a pawl and a ratchet wheel (directional rotational motion transmitting mechanism) provided in a rotor of the wind turbine unit in Fig. 1.
Fig. 6 is a horizontal cross-sectional view of the wind turbine unit portion of the wind power pumped hydropower generating apparatus in Fig. 1.
Fig. 7 illustrates a vertical axis type wind turbine generator invented by the present inventor, which is presented as a reference of the present invention.

### Best Modes for Carrying Out the Invention

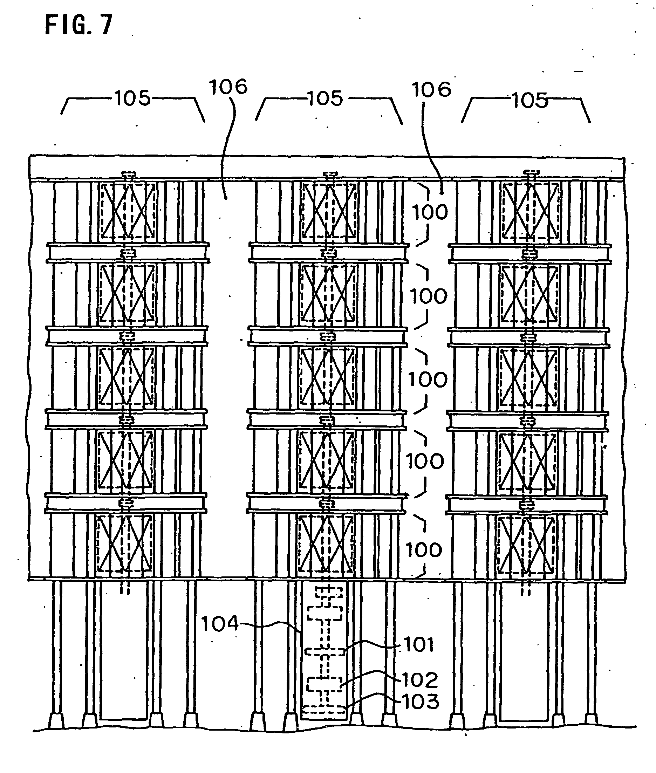

Prior to describing an embodiment of the present invention, initially, a wind turbine generator invented by the present inventor of the subject application in order to overcome the problems of the conventional wind turbine generator by modifying a vertical Savonius wind turbine will be described as a reference of the present invention (hereinafter, referred as "reference"). This wind turbine generator has a structure as shown in Fig. 7. That is, a plurality of wind turbine units 100 including a Savonius rotor equipped with guide vanes and auxiliary guide vanes for concentrating wind are coaxially stacked, and a nacelle 104 accommodating a generator 101 and a flywheel 103 is connected to one end of the stacked wind turbine units. A wind turbine generator 105 is thus constituted. Each wind turbine unit 100 captures wind energy at various altitudes from the ground. The guide vanes are movable. The guide vanes concentrate the wind with normal wind energy level in the wind turbine rotor when they are in an open state. On the other hand, when the wind is too strong, they close an airflow path and stop the rotation of the wind turbine. Rotation speed of fly wheel 103 can be adjusted by attached speed control means 102 so as to control storage energy. That is, depending on strength of the wind, excessive energy is stored in the flywheel or the stored energy is released to the generator, thereby leveling the input to the generator. When a plurality of wind turbine generators 105 are installed, an inter-unit guide vane 106 is employed for concentrating wind more effectively. Here, wind turbine unit 100 and inter-unit guide vane 106 described above are implemented also in the present invention, and detailed structure thereof will be described in the embodiment of the present invention.

This reference achieves the following effects. The guide vane, the auxiliary guide vane and inter-unit guide vane 106 together perform a wind concentrating effect so as to enhance wind energy capturing capability. A plurality of wind turbine units 100 are stacked so as to capture the wind energy at various altitudes from the ground without occupying a large area for the apparatus. When the wind is strong, excessive energy is temporarily stored in flywheel 103 capable of adjusting an amount of energy storage, so as to level the input to the generator. At the same time, as compared with the maximum input of the wind turbine, a capacity of the generator is made smaller so as to reduce generator loss, thereby improving energy conversion efficiency and reducing the cost for the apparatus.

In a propeller type wind turbine generator, which is commonly used today, a capacity of an individual unit tends to become larger, and such a large unit is implemented by increasing a length of a blade and a height of a tower. In addition, the wind turbine generator tends to be installed offshore for excellent windy environment. Since the wind energy is unstable and fluctuates every second and a sophisticated control has been necessary in order to output alternating current power of a stable frequency, wind turbine generation by propeller type is facing a technical and economical difficulty in an attempt to maintain stability of a electric power system as a total capacity of wind power generation is increased.

Furthermore, the propeller type wind turbine generator is not efficient. For example, it performs the efficiency of approximately 35 to 40% of the wind input to swept area, and it corresponds to 58 to 67% of "Betz-limit" which is regarded as the optimistic energy capturing efficiency of the wind turbine generator. In addition, since its wind swept area is a circle, maximum availability of the spatial plane above the installation is not achieved. Moreover, the total area for installation site becomes large because the apparatus should normally be installed at intervals three times or at least two times the diameter of the wind turbine. Thus, overall wind energy capturing efficiency is considerably lowered. In addition, a large capacity unit with long and large blades tends to be mechanically weak.

In order to cope with these problems, the wind turbine generator in the reference above intends to enhance wind concentrating ability and to improve wind energy capturing efficiency with a method of capturing wind at various altitudes from the ground in accordance with its height, as well as to level such wind energy unstable in terms of time. Leveling of the energy is performed in the following manner. The capacity of the generator is made relatively small so as to enhance efficiency of the apparatus when the wind speed is normal. Excessive energy is stored in the flywheel when the wind is strong, and the stored energy is discharged to the generator when the wind input is attenuated, while the rotation speed of the generator is maintained at a constant level.

Although such an apparatus can level the output, sophisticated mechanical control is required in order to stabilize the output power frequency.

An object of the present invention is to provide economic means for generating power, which has a wind energy capturing effect exactly the same as the reference, achieves excellent energy storage capacity, allows easy control of rotation speed, and provides a stable output frequency, while maintaining the structure of the wind turbine portion in the reference described above. In addition, another object of the present invention is to utilize a generator achieving a rotation speed faster than in directly utilizing the wind, as well as to achieve large capacity by integrating individual small generators.

An embodiment of the present invention will now be described.

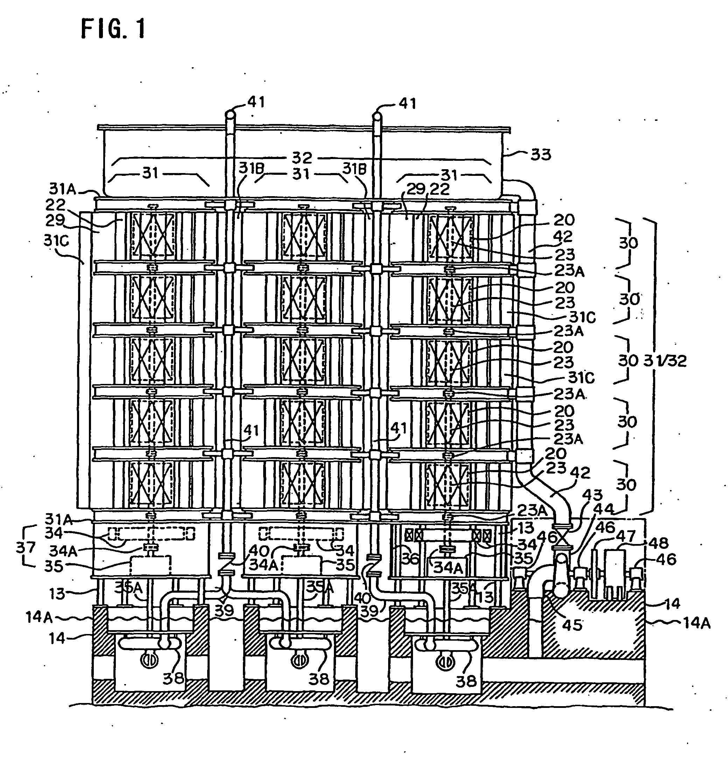

Fig. 1 is a side view of a wind power pumped hydropower generating apparatus according to the present invention. This figure shows an example in which three wind turbine tandems 31 are provided, and five wind turbine units 30 constitute each wind turbine tandem 31. Detailed description of each component will be provided in the following.

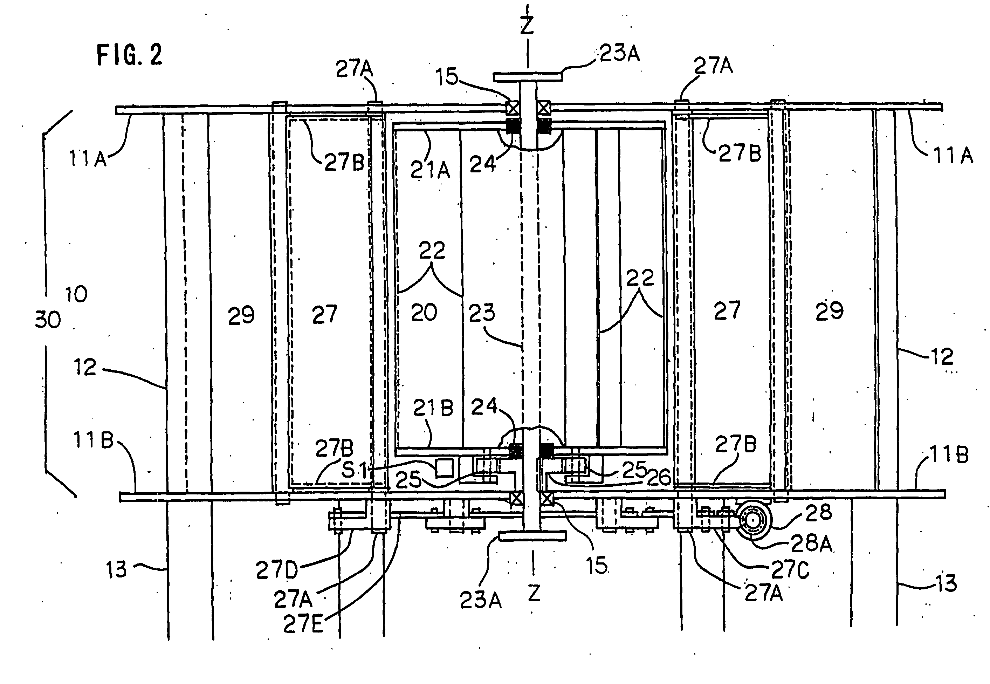

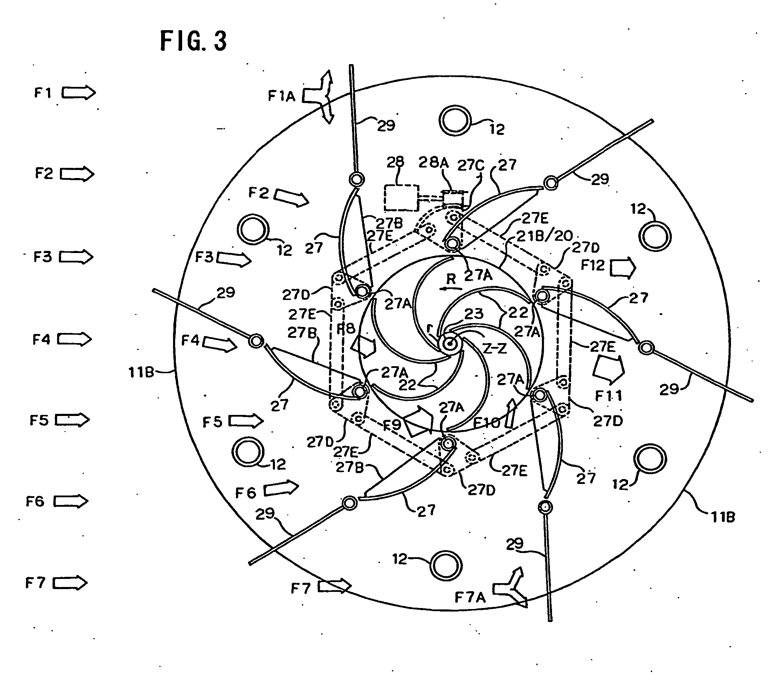

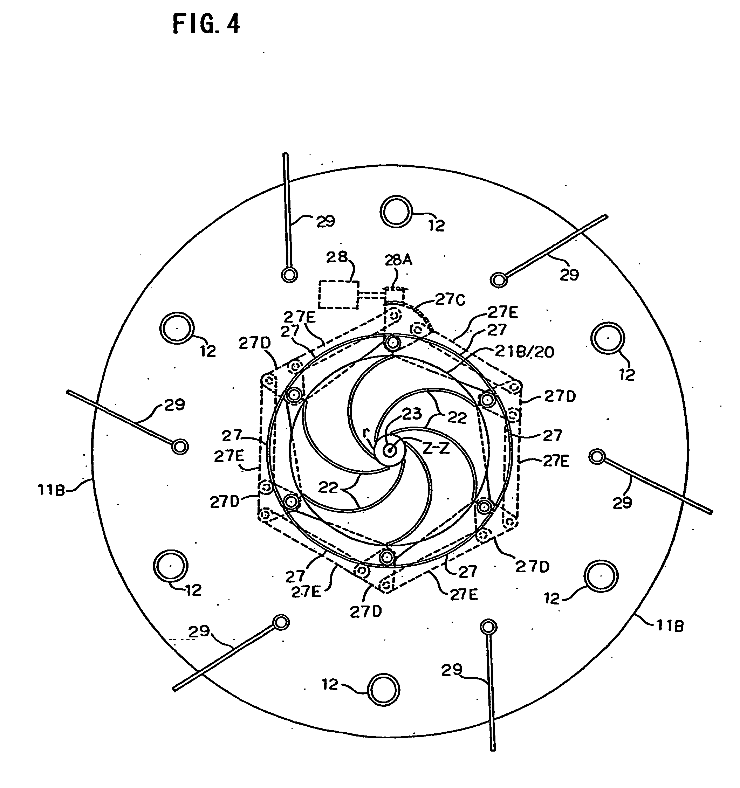

Figs. 2, 3 and 4 illustrate detailed structure of wind turbine unit 30. Fig. 2 is a side view, and Figs. 3 and 4 are horizontal cross-sectional views of wind turbine unit 30. Fig. 3 shows the guide vanes in an open state, while Fig. 4 shows the guide vane in a closed state. The line Z-Z specified in Fig. 2 is a vertical central axis of the apparatus, which serves as a rotation center of many principal members such as a rotor described below. Wind turbine unit 30 has a structure the same as in the reference. Figs. 2, 3 and 4 show structures of basic wind turbine unit 30 without an inter-unit guide vane or the like.

In these figures, a frame 10 is constituted of a pair of upper and lower disc-like frame decks 11A, 11B concentric and in parallel to each other, and six spacers 12 define the interval therebetween.

A rotor 20 is constituted of a pair of upper and lower coaxial rotor disk plates 21A, 21B and six buckets 22 fixed between the rotor disk plates 21A, 21B. Bucket 22 is a plate member curved in a convex or an arc shape, as shown in Figs. 3 and 4. Buckets 22 are arranged around central axis Z-Z in equal angular intervals and in the same curve orientation such that one end thereof is located substantially on an outer circumference of rotor disk plates 21A, 21B, and the other end thereof is located on a concentric small circle r. A rotor shaft 23 is rotatably supported on frame decks 11A and 11B by a pair of bearings 15, and rotor shaft 23 rotatably supports rotor 20 by a pair of upper and lower rotor receptacles 24, both concentric with central axis Z-Z. Rotation of rotor 20 promoted by a torque generated by the wind is directed to an arrow R in Fig. 3, which is determined by the curve orientation of buckets 22.

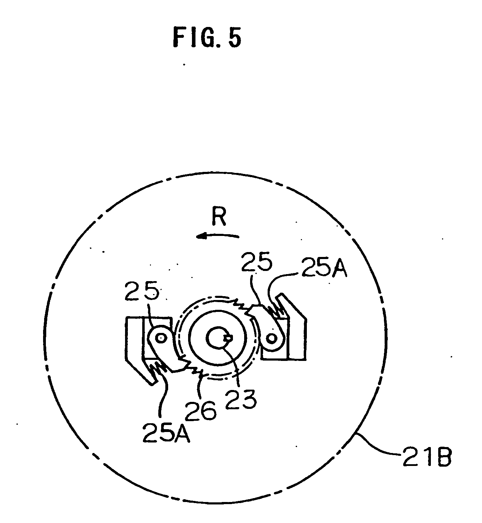

A pair of pawls 25 is rotatably supported on the lower rotor disk plate 21B and face a ratchet wheel 26 fixed to rotor shaft 23, thereby serving as a directional rotational motion transmitting mechanism which transmits rotation of rotor 20 in the direction shown with arrow R to rotor shaft 23 but does not transmit rotation of rotor shaft 23 in the same direction to rotor 20. A relation between pawl 25 and ratchet wheel 26 is shown in a plan view from rotor 20 side of Fig. 5 in addition to the side view of Fig. 2. That is, a pair of pawls is biased by springs 25A so as to engage with teeth of ratchet wheel 26. The rotation direction of rotor shaft 23 is also in the direction shown with arrow R similar to rotor 20, and is not reversed.

A guide vane 27 is fixed to a guide vane shaft 27A rotatably supported by frame decks 11A, 11B. Corresponding to the number of buckets 22, six guide vanes 27 are provided. Here, guide vane 27 is formed with a plate principally curved like an arc. Guide vane 27 pivots on an axis of guide vane shaft 27A. The range of pivot is from a state shown in Fig. 3 to a state shown in Fig. 4. In other words, the state shown in Fig. 3 indicates that an airflow window is open, while the state shown in Fig. 4 indicates that the airflow window is closed. In the closed state shown in Fig. 4, six guide vanes 27 together form a circle. Reference numeral 27B represents a reinforcement plate for guide vane 27, which is joined to upper and lower ends of guide vane 27.

One ends of guide vane operating plates 27C and 27D are fastened to projecting portions of six guide vane shafts 27A under lower frame deck 11B respectively. Guide vane operating plates 27C, 27D are both triangular links basically, out of which one guide vane operating plate 27C alone has a geared outer circumference. Guide vane operating plates 27C and 27D adjacent to each other are connected between respective adjacent link points with guide vane operating links 27E so as to form an annular linkage totally. Guide vane operating plate 27C is operated by a guide vane operating motor 28 equipped with a worm 28A. In other words, forward or reverse rotation of guide vane operating motor 28 swings guide vane operating plates 27C, 27D, so as to move guide vanes 27 between the open and closed states shown in Figs. 3 and 4.

Though the motor-driven guide vane operating mechanism has been described above, it may be hydraulic or pneumatic. In addition, instead of operating all guide vanes 27 by connecting them by guide vane operating link 27E, though not shown, guide vanes 27 may be divided into a plurality of groups, and in each group, guide vane 27 may be coupled to one another by guide vane operating link 27E. Then, each group may be individually operated by guide vane operating motor 28.

As shown in Fig. 3, auxiliary guide vanes 29 are fixed to flame decks 11A, 11B substantially on an extension of guide vanes 27 in the open state. An assembly of frame 10, rotor 20 and rotor shaft 23 including guide vanes 27 and auxiliary guide vanes 29 is referred to as wind turbine unit 30. The present invention assumes the wind turbine unit described above as a basic component of a wind turbine portion of the power generating apparatus. It is to be noted that wind turbine unit 100 in the reference shown in Fig. 7 has a structure the same as that of wind turbine unit 30 described above.

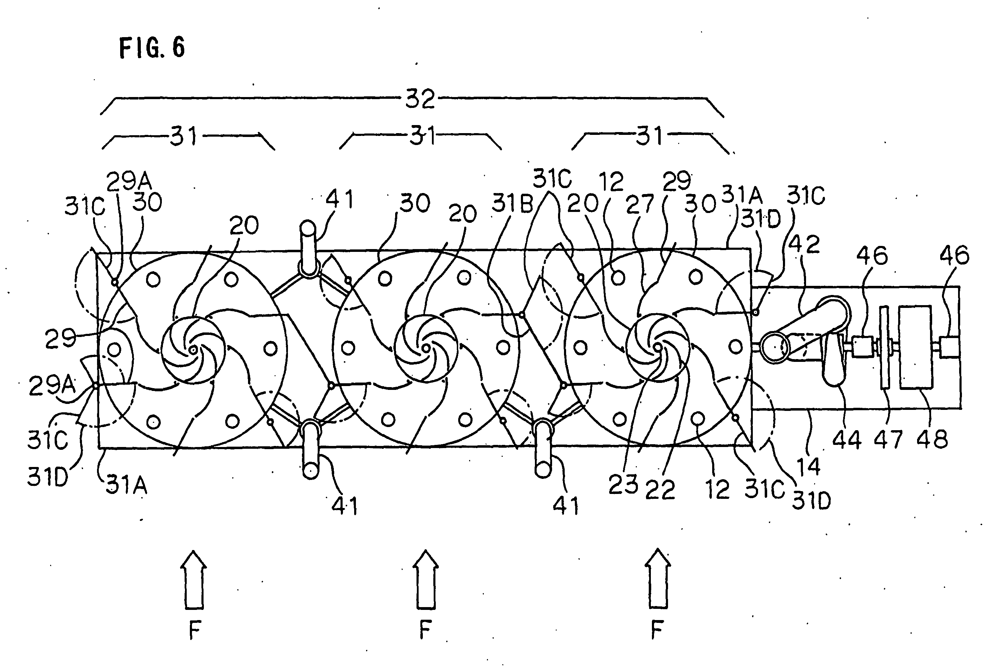

A system of the wind power pumped hydropower generating apparatus as an embodiment of the present invention will now be described with reference to Figs. 1 and 6. In Fig. 1, five wind turbine units 30 are coaxially stacked, and rotor shafts 23 of the adjacent wind turbine units 30 are loosely coupled by rotor shaft flange 23A to each other so as to minimize motion resistance due to displacement of shaft center during rotation. A group of such stacked wind turbine units 30 is referred to as wind turbine tandem 31 in the present invention. Fig. 6 is a horizontal cross-sectional view of a portion of wind turbine unit 30 of the wind power pumped hydropower generating apparatus in Fig. 1.

In Fig. 1, three wind turbine tandems 31 are arranged in one row horizontally and connected all together by connecting boards 31A at upper and lower portions of each wind turbine tandem 31 so as to constitute a wind turbine tandem group 32. Therefore, wind turbine tandem group 32 in Fig. 1 is constituted of fifteen wind turbine units 30. Any number of wind turbine units can be selected, so long as the number of wind turbine units 30 is consistent for each wind turbine tandem 31.

As shown in Figs. 6 and 1, each wind turbine tandem 31 in wind turbine tandem group 32 is arranged with some space apart from each other. As shown in Fig. 6, an inter-unit guide vane 31B serves as a fixed partition between the wind turbine tandems 31. Inter-unit guide vane 106 in the reference shown in Fig. 7 has a structure the same as inter-unit guide vane 31B described here.

As can be clearly seen in Fig. 6, a part of auxiliary guide vane 29 is attached to a pivotable sub-auxiliary guide vane 31C hinged on node 29A provided at one end. Sub-auxiliary guide vane 31C enhances a wind concentrating effect with respect to a windward current (arrow F) in a normal wind speed condition as well as a diffuser effect with respect to a leeward current, as compared with a case of auxiliary guide vane 29 alone. On the other hand, sub-auxiliary guide vane 31C tends to have small mechanical strength because it projects from wind turbine unit 30, and it cannot resist the strong wind. Accordingly, when the wind is strong, sub-auxiliary guide vane 31C is pivoted on a track 31D around node 29A with dedicated operating means, and folded on auxiliary guide vane 29. As the dedicated operating means here is driven by a motor in a manner similar to the guide vane operating mechanism (such as 28 in Fig. 2), description thereof will not be provided. It is to be noted that sub-auxiliary guide vane 31C is not an essential component but a component for improving a function.

Referring back to Fig. 1, other portions in the wind power pumped hydropower generating apparatus will be described. Wind turbine tandem group 32 is supported on a base 14 by a plurality of struts 13. Base 14 is set submerged in water, assuming that reference numeral 14A indicates a water surface. In addition, a tank 33 is mounted on upper connecting board 31A, in common for three wind turbine tandems 31.

An auxiliary generator 34 is connected to rotor shaft flange 23A at the lower end of lowermost wind turbine unit 30 in each wind turbine tandem 31, and further below, speed control means 35 is coaxially connected via a clutch 34A. Auxiliary generator 34 and speed control means 35 are accommodated in a nacelle shielded with a cover 36.

An extension shaft 35A on the output side of speed control means 35 provided in each nacelle 37 of each wind turbine tandem 31 further extends into the water below, and is connected so as to drive a rotary pump 38. An outlet of pump 38 is connected to tank 33 via a pump-up tube/A 39, a check valve 40, and a pump-up tube/B 41.

A water turbine 44 installed in a lower portion of the apparatus is connected to tank 33 via a discharge tube 42 and a control valve 43, and a drain tube 45 of water turbine 44 is conducted into an open water area. A rotary part of water turbine 44 is rotatably supported on bearings 46, and a flywheel 47 and a main generator 48 are connected.

The operation of the wind power pumped hydropower generating apparatus described above will now be discussed. When an airflow window in wind turbine unit 30 in Fig. 3 is open, it is assumed that the left side is a windward side and currents are shown with arrow F1 to F7. Current F1 impinges auxiliary guide vane 29, and some portion thereof flows into the apparatus and other portion thereof flows toward outside the apparatus as shown with arrow F1A. Currents F2 and F3 impinge guide vane 27 and merge with some portion of F1A to form a current F8, which acts on a concave surface of bucket 22 to rotate rotor 20. Currents F4 to F6 are combined into F9 to form a main current acting on a concave surface of bucket 22 so as to rotate rotor 20. Current F7 impinges auxiliary guide vane 29, and some portion thereof flows into the apparatus to form a current F10 as shown with arrow F7A, which rotates rotor 20 in a similar manner. The remainder thereof flows toward outside the apparatus. Rotor 20 rotates in a direction shown with an arrow R, regardless of the wind direction.

Currents F8 to F10 that have rotated rotor 20 are turned into currents F11, F12, and exit toward the leeward side. The arrangement of the guide vane 27 and auxiliary guide vane 29 performs a diffuser effect facilitating exhaustion, because the leeward side is wide-open so as to lower the pressure of the exhaust wind. Some portion of the current that acted on bucket 22 acts on the concave side of bucket 22 on the opposite side through a gap provided around rotor shaft 23, and performs an effect specific to a Savonius wind turbine supplementing a torque of rotor 20.

As described above, presence of guide vane 27 and auxiliary guide vane 29 performs the following effects. That is, guide vane 27 and auxiliary guide vane 29 concentrate the wind so as to enhance effective wind speed of favorable wind acting on concave surface of bucket 22. Meanwhile, an adverse wind acting on a convex surface of bucket 22 is cut. The diffuser effect with respect to the exhaust is exhibited so as to increase a favorable wind torque and to reduce an unfavorable wind torque of rotor 20. It is to be noted that auxiliary guide vane 29 serves to reinforce these functions as compared with a case of guide vane 27 alone, although guide vane 27 alone somewhat performs similar functions. Sub-auxiliary guide vane 31C projecting from auxiliary guide vane 29 increases wind swept area, thereby further enhancing wind concentrating function.

When the wind becomes strong and components such as rotor 20 and pump 38 are in danger of destruction, or when the generator (auxiliary generator 34, main generator 48) cannot accept all the energy, guide vanes 27 form a shield around rotor 20, as shown in Fig. 4. This operation is performed by making guide vane operating plate 27C pivot by means of guide vane operating motor 28, and by making all other guide vane operating plates 27D pivoting together by means of guide vane operation links 27E.

In Fig. 1, rotation of rotor 20 is transmitted downward via rotor shaft 23, to rotate auxiliary generator 34. When it is breezy, clutch 34A is in a released state, and auxiliary generator 34 alone directly generates power. When the wind is sufficient exceeding a prescribed value, clutch 34A is engaged, speed control means 35 is actuated, and pump 38 is actuated via extension shaft 35A for pumping up water. Here, whether auxiliary generator 34 should generate power or not can arbitrarily be selected.

When pump 38 is actuated, water is pumped up to tank 33 via pump-up tube/A 39, check valve 40 and pump-up tube/B 41, and the wind energy is converted to the potential energy of water. Even if the wind becomes weak and the rotation speed of pump 38 is lowered during pumping up water, water in pump-up tube/B 41 being pumped up is prevented from falling by means of check valve 40.

When water level in tank 33 is raised to some extent, water is started to discharge. Water discharge is performed by opening control valve 43 provided under discharge tube 42 and closely above water turbine 44. Discharged water rotates water turbine 44 to convert the potential energy of the water to kinetic energy, and is released into an open water area via drain tube 45.

Rotation of water turbine 44 drives main generator 48. Flywheel 47 is provided in order to suppress fluctuation in the rotation speed of main generator 48. Adjustment of rotation speed and output of main generator 48 is controlled by control valve 43.

Inter-unit guide vane 31B shown in Fig. 6 acts to block a portion of currents F1A and F7A flowing toward outside the apparatus as in the description of the operation in connection with Fig. 3, and acts to force it to be directed to rotor 20 so as to enhance the torque of rotor 20.

The reason why auxiliary generator 34 is provided is as follows. If water is pumped up directly by pump 38 when the wind speed is insufficient, water may not be pumped up at all due to energy loss in pump 38. Accordingly, an attempt to convert even weak wind energy into electric power so as to make effective use of it is made. Presence of auxiliary generator 34 is not a necessary condition.

As pump 38 is used only for pumping up the water, precise control of the rotation speed thereof is not necessary. It is only necessary to adjust the rotation speed of rotor shaft 23 determined depending on the wind speed with speed control means 35, and to generate a torque required for maintaining rotation of pump 38. In other words, when the wind speed is low, the rotation speed of extension shaft 35A is lowered, while the torque of pump 38 is increased. In this manner, pump 38 continues to rotate without stopping even with low speed, and the water is pumped up even if an amount thereof is small. When the wind speed is high, the rotation speed of extension shaft 35A is increased, so as to efficiently pump up water.

By pumping the water up to tank 33, the wind energy unstable of in terms of quantity is temporarily stored so as to suppress fluctuation, as well as to facilitate speed control of main generator 48. In addition, a water turbine generator of which rotation speed is generally higher than a wind turbine generator can be used, and therefore, reduction in size of an apparatus can be performed.

Furthermore, the structure of wind turbine tandem 31 and wind turbine tandem group 32 of the present invention facilitates mounting of tank 33 at a high location. If wind tandem group 32 is implemented, tank 33, water turbine 44 and main generator 48 can be integrated respectively.

As the present invention employs water as a medium of energy conversion, a recent tendency of installing wind turbine generator offshore is convenient for the system according to the present invention. Installation location, however, is not limited to offshore, but it may be on a lake, a pond.or a marsh. In addition, though the apparatus is installed on base 14 submerged in water in Fig. 1, the apparatus may be set on a floating body instead of base 14, and pump 38 may be provided in the water.

## Claims

1. A wind power pumped hydropower generating apparatus comprising a wind turbine constituted as an assembly of a plurality of wind turbine units (30), each having a vertical central axis, wherein
in said wind turbine unit (30), a rotor shaft is coaxially and rotatably supported on a frame (10) formed by a pair of upper and lower frame decks (11A, 11B) coaxially held with a space therebetween, so as to allow rotation on said central axis
a rotor (20) is coaxially and rotatably supported on said rotor shaft (23) between said pair of frame decks (11A, 11B),
said rotor is constituted of a pair of rotor disk plates (21A, 21B) held with a space therebetween and a plurality of buckets (22), each curved in a convex or an arc shape and provided between said rotor disk plates in a distributed manner in the same curve orientation and in equal angular intervals with respect to said central axis,
a directional rotational motion transmitting mechanism (25, 25A, 21B, 26, 23) is attached to connect said rotor to said rotor shaft, said directional rotational transmitting mechanism transmitting a rotation of said rotor in a definite direction to said rotor shaft, but not transmitting a rotation of said rotor shaft in said definite direction to said rotor,
a plurality of guide vanes (27) constituted of plates curved like an arc are provided, said guide vane being pivotably supported by a guide vane shaft (27A), attached on one end of said guide vane, in equal angular intervals at positions closest to an outer end of said rotor on said frame decks (11A, 11B),
a guide vane operating mechanism (27A, 27C, 27D, 27E) is provided, said guide vane operating mechanism operating said guide vanes (27) so that said guide vanes pivot and form a shield on an outer circumference of said rotor when the apparatus is in a closed state while each of said guide vanes pivots by a definite angle from the closed state so as to open an airflow window of said rotor when the apparatus enters into an open state,
a plurality of plate-like auxiliary guide vanes (29) are attached to said frame decks (11A, 11B), one end of said auxiliary guide vane being located close to an outer end of said guide vane (27) in the open state and extends to the same direction as said guide vanes in the open state extends,
a wind turbine tandem (31) is constituted by coaxially stacking a plurality of said wind turbine units (30) and connecting said rotor shafts (23) of said wind turbine units adjacent to each other,
said wind turbine tandem (31) is fixed above water by a supporting member (14), and
said wind power pumped hydropower generating apparatus further includes
a pump (38) located in the water and driven by an extension shaft (35A) coaxially attached to a lower end of said connected rotor shaft (23),
a tank (33) provided on the top of said wind turbine tandem (31),
a water turbine (44) provided in relatively lower portion of said wind turbine tandem (31),
a main generator (48) driven by said water turbine,
a pump-up tube (39, 41) connecting said pump (38) to said tank (33),
a discharge tube (42) connecting said tank to said water turbine, and
a drain tube (45) extending from said water turbine to an open water area.

2. The wind power pumped hydropower generating apparatus according to claim 1, **characterized in that**
a plurality of assemblies (32) of said wind turbine tandem (31) including said extension shaft (35A) as well as said pump (38) and said pump-up tube (39, 41) are arranged in one row spaced apart from each other, between said adjacent wind
an inter-unit guide vane (31B) is provided between said adjacent wind turbine tandems respectively, and
said tank (33) and said main generator (48) as well as said discharge tube (42) and said drain tube (45) are provided in common for said plurality of assemblies of said wind turbine tandems.

## Patentansprüche

1. Windenergie-Pumpwasserenergieerzeugungsvorrichtung mit einer Windturbine, die aus einem Zusammenbau einer Vielzahl von Windturbineneinheiten (30) aufgebaut ist, die jeweils eine vertikale mittlere Achse (Z-Z) aufweisen, wobei:
in der Windturbineneinheit (30) wird ein Rotorschaft (23) koaxial und rotierbar auf einem Rahmen (10) getragen, der durch ein Paar von, koaxial mit einem Zwischenraum gehaltenen, oberen und unteren Tragflächenrahmen (11A, 11B) gebildet wird, um eine Rotation auf der mittleren Achse zu gestatten,
ein Rotor (20) wird koaxial und rotierbar auf dem Rotorschaft (23) zwischen dem Paar von Tragflächenrahmen (11A, 11B) getragen,
der Rotor ist aufgebaut aus einem Paar von Rotorscheibenplatten (21A, 21B), die mit einem Zwischenraum gehalten werden, und einer Vielzahl von Schaufeln (22), die jeweils in einer konvexen oder Bogenform gebogen sind und zwischen den Rotorscheibenplatten auf verteilte Weise in derselben Biegeorientierung und bei gleichen Winkelabständen in Bezug auf die mittlere Achse ausgestaltet sind,
ein gerichteter Rotationsbewegungsübertragungsmechanismus (25, 25A, 21B, 26, 23) ist so angebracht, daß er den Rotor mit dem Rotorschaft verbindet, wobei der gerichtete Rotationsübertragungsmechanismus eine Rotation des Rotors in einer bestimmten Richtung auf den Rotorschaft überträgt, eine Rotation des Rotorschafts in dieser bestimmten Richtung auf den Rotor jedoch nicht überträgt,
eine Vielzahl von Leitflügeln (27) sind vorgesehen, die aus wie ein Bogen gebogenen Platten aufgebaut sind, wobei der Leitflügel drehbar getragen wird durch einen Leitflügelschaft (27A), der an einem Ende des Leitflügels bei gleichen Winkelabständen bei Positionen befestigt ist, die an einem Außenende des Rotors auf den Tragflächenrahmen (11A, 11B) am nächsten sind,
ein Leitflügelantriebsmechanismus (27A, 27C, 27D, 27E) ist vorgesehen, wobei der Leitflügelantriebsmechanismus die Leitflügel (27) so antreibt, daß die Leitflügel geschwenkt werden und ein Schild am Außenumfang des Rotors bilden, wenn die Vorrichtung sich in einem geschlossenen Zustand befindet, während jeder der Leitflügel aus dem geschlossenen Zustand um einen bestimmen Winkel geschwenkt wird, um ein Luftstromfenster des Rotors zu öffnen, wenn die Vorrichtung in einen geöffneten Zustand übergeht,
eine Vielzahl von plattenartigen Hilfsleitflügeln (29) sind an den Tragflächenrahmen (11A, 11B) befestigt, wobei ein Ende des Hilfsleitflügels im geöffneten Zustand in der Nähe eines Außenendes des Leitflügels (27) lokalisiert ist und sich in derselben Richtung erstreckt, wie sich die Leitflügel im geöffneten Zustand erstrecken,
ein Windturbinentandem (31) setzt sich zusammen aus einem koaxialen Übereinanderstapeln einer Vielzahl der Windturbineneinheiten (30) und einem Verbinden der Rotorschafte (23) der Windturbineneinheiten, die einander benachbart sind,
das Windturbinentandem (31) wird durch ein Trageelement (13, 14) über Wasser gehalten, und
die Windenergie-Pumpwasserenergieerzeugungsvorrichtung schließt weiter ein:
eine Pumpe (38), die im Wasser lokalisiert ist und durch einen Verlängerungsschaft (35A) angetrieben ist, der koaxial am unteren Ende des verbundenen Rotorschafts (23) befestigt ist, einen Tank (33), der oben auf dem Windturbinentandem (31) vorgesehen ist,
eine Wasserturbine (44), die in einem relativ niedrigeren Abschnitt des Windturbinentandems (31) vorgesehen ist,
einen Hauptgenerator (48), der durch die Wasserturbine angetrieben wird,
ein Hochpumprohr (39, 41), das die Pumpe (38) mit dem Tank (33) verbindet,
ein Auslaßrohr (42), das den Tank mit der Wasserturbine verbindet, und
ein Abflußrohr (45), das sich von der Wasserturbine zum offenen Wasserbereich hin erstreckt.

2. Windenergie-Pumpwasserenergieerzeugungsvorrichtung gemäß Anspruch 1, **dadurch gekennzeichnet, daß**
eine Vielzahl von Zusammenbauten (32) des Windturbinentandems (31), das den Verlängerungsschaft (35A) sowie die Pumpe (38) und das Hochpumprohr (39, 41) einschließt, mit Abstand voneinander in einer Reihe angeordnet sind,
ein Zwischeneinheits-Leitflügel (31B) jeweils zwischen benachbarten Windturbinentandems vorgesehen ist, und
der Tank (33) und der Hauptgenerator (48) sowie das Auslaßrohr (42) und das Abflußrohr (45) für die Vielzahl von Zusammenbauten der Windturbinentandems zusammen geteilt werden.

## Revendications

1. Appareil de génération d'hydroénergie pompé avec l'énergie du vent comprenant une turbine éolienne constituée comme un ensemble d'une pluralité d'unités de turbine éolienne (30), chacun ayant un axe central vertical (Z-Z'), dans lequel
dans ladite unité de turbine éolienne (30), un arbre de rotor (23) est supporté de manière coaxiale et de manière rotative sur un cadre (10) formé par une paire de coffres de cadre supérieur et inférieur (11A, 11B) maintenus coaxialement avec un espace entre eux, de façon à permette la rotation sur ledit axe central,
un rotor (20) est supporté de manière coaxiale et de manière rotative sur ledit arbre de rotor (23) entre ladite paire de coffres de cadre (11A, 11B),
ledit rotor est constitué d'une paire de plaques de disque de rotor (21A, 21B) maintenues avec un espace entre eux et une pluralité d'auges (22) chacune incurvée en une forme convexe et une forme d'arc et disposée entre lesdites plaques de disque de rotor de manière distribuée dans la même orientation de courbe et à des intervalles angulaires égaux par rapport au dit axe central,
un mécanisme de transmission de mouvement rotatif directionnel (25, 25A, 21B, 26, 23) est fixé pour connecter ledit rotor au dit arbre de rotor, ledit mécanisme de transmission rotatif directionnel transmettant une rotation dudit rotor dans une direction définie au dit arbre de rotor, mais ne transmettant pas une rotation dudit arbre de rotor dans ladite direction définie au dit rotor,
une pluralité d'aubes de guidage (27) constituées de plaques incurvées de type arc sont prévues, ladite aube de guidage étant supportée en pivot par un arbre d'aube de guidage (27A) fixé sur une extrémité de ladite aube de guidage, à des intervalles angulaires égaux en des positions les plus proches d'une extrémité externe dudit rotor sur lesdits coffres de cadre (11A, 11B),
un mécanisme d'opération d'aube de guidage (27A, 27C, 27D, 27E) est prévu, ledit mécanisme d'opération d'aube de guidage met en tangage lesdites aubes de guidage (27) de sorte que lesdites aubes de guidage pivotent et forment une protection sur sa circonférence extérieure dudit rotor lorsque l'appareil est dans un état fermé tandis que chacune des aubes de guidage pivote sur un angle défini de l'état fermé de façon à ouvrir une fenêtre d'écoulement d'air dudit rotor lorsque l'appareil entre dans un état ouvert,
une pluralité d'aubes de guidage auxiliaires de type plaque (29) sont fixées aux dits coffres de cadre (11A, 21B), une extrémité de ladite aube de guidage auxiliaire étant positionnée proche d'une extrémité externe de ladite aube de guidage (27) dans l'état ouvert et s'étend dans la même direction à mesure que lesdites aubes de guidage dans l'état ouvert se développent,
un tandem de turbines éoliennes (31) est constitué en empilant dans le sens coaxial une pluralité d'unités de turbine éolienne (30) et en raccordant lesdits arbres de rotor (23) desdites unités de turbine éolienne adjacentes les unes aux autres,
ledit tandem de turbines éoliennes (31) est fixé au-dessus de l'eau par un élément de support (13, 14), et
ledit appareil de génération d'hydroénergie pompée par l'énergie éolienne inclut en outre
une pompe (38) placée dans l'eau et entraînée par un arbre d'extension (35A) fixé de manière coaxiale à une extrémité inférieure dudit arbre de rotor connecté (23),
un réservoir (53) disposé sur le haut dudit tandem de turbines éoliennes (31),
une turbine à eau (44) disposée dans une partie relativement inférieure dudit tandem de turbines éoliennes (31),
une génératrice principale (48) entraînée par ladite turbine à eau,
un tuyau de pompage vers le haut (39, 41) raccordant ladite pompe (38) audit réservoir (33),
un tuyau de décharge (42) raccordant ledit réservoir à ladite turbine à eau, et
un tube de drain (45) s'étendant de ladite turbine à eau vers une zone d'eau ouverte.

2. Appareil de génération d'hydroénergie pompée par l'énergie éolienne selon la revendication 1, **caractérisé en ce que**
une pluralité des ensembles (32) dudit tandem de turbines éoliennes (31) incluant ledit arbre d'extension (35A) est de même que ladite pompe (38) et ledit tuyau de pompage vers le haut (39, 41) sont disposée en une rangée espacés les uns des autres,
une aube de guidage inter-unité (31B) est disposée entre les tandems de turbines éoliennes adjacentes respectivement, et
ledit réservoir (33) et ladite génératrice principale (48) de même que ledit tuyau de décharge (42) et ledit tuyau de drain (45) sont prévus en commun pour ladite pluralité des ensembles desdits tandems de turbines éoliennes.
